# EUROPEAN PATENT APPLICATION

(11) **EP 4 524 671 A1**
(43) Date of publication of application: **19.03.2025**
(21) Application number: 23936466.4
(22) Date of filing: 13.12.2023
(51) Int. Cl.: G05B 23/02

(54) **TEST SYSTEM AND METHOD FOR UNMANNED DEVICE CONTROLLER**

(30) Priority: 10.05.2023 CN 202310524772
(71) Applicant: Beijing Jingwei Hirain Technologies Co., Inc., Beijing 100015 (CN)
(72) Inventor: CAO, Pan, Beijing 100015 (CN); WANG, Yongting, Beijing 100015 (CN); ZHONG, Haixiao, Beijing 100015 (CN)
(74) Representative: Valea AB
(86) International application number: PCT/CN2023/138328
(87) International publication number: WO 2024/230162

(57) **Abstract**

The present application discloses a system and a method for testing an unmanned driving device controller, including an image acquisition device (110), an image storage device (120) and a video injection core board (130), in which target image data is obtained based on second image data and first image data, and the target image data is sent to an unmanned driving device controller (150), and the unmanned driving device controller (140) outputs a control instruction based on the received target image data.

## Description

### CROSS-REFERENCE TO RELATED APPLICATIONS

This application claims priority to Chinese Patent Application No. 202310524772.4, titled "SYSTEM AND METHOD FOR TESTING UNMANNED DRIVING DEVICE CONTROLLER" and filed on May 10, 2023, which is hereby incorporated by reference in its entirety.

### TECHNICAL FIELD

The present application belongs to the technical field of automobile simulation testing, and in particular, relates to a system and a method for testing an unmanned driving device controller.

### BACKGROUND

In general, during the process of driving, unmanned driving device needs to make driving decisions and determine driving instructions based on the information acquired by sensors such as on-board cameras and lidars, as well as device status information.

In order to ensure the safety and stability of unmanned driving device, after the electronic control unit (ECU) of the unmanned driving device is manufactured, it is often necessary to test the performance of the ECU.

### SUMMARY

An embodiment of present application provides a system for testing an unmanned driving device controller, including:
an image acquisition device, configured to acquire first image data and send the first image data to a video injection core board, in which the first image data includes at least a first image attribute and a first image content;
an image storage device, configured to send second image data to the video injection core board, in which the second image data includes a second image content;
the video injection core board, configured to analyze the first image attribute to obtain an analyzed first image attribute, replace the first image content with the second image content to obtain target image data, and send the target image data to the unmanned driving device controller, in which the target image data includes at least the analyzed first image attribute and the second image content; and
the unmanned driving device controller, configured to receive the target image data sent by the video injection core board and output a control instruction based on the target image data.

An embodiment of the present application further provides a method for testing the unmanned driving device controller, applied to the system for testing an unmanned driving device controller according to the first aspect, the method including:
obtaining the first image data acquired by the image acquisition device and the second image data sent by the image storage device, in which the first image data includes at least the first image content and the first image attribute, and the second image data includes at least the second image content;
parsing the first image attribute to obtain an analyzed first image attribute, and replacing the first image content with the second image content to obtain the target image data; and
performing a simulation test on the unmanned driving device controller through the target image data.

In addition, an embodiment of the present application also provides apparatus for testing the unmanned driving device controller, the apparatus including:
an obtaining module, configured to obtain the first image data acquired by the image acquisition device and the second image data sent by the image storage device, in which the first image data includes at least the first image content and the first image attribute, and the second image data includes at least the second image content;
a processing module, configured to analyze the first image attribute to obtain the analyzed first image attribute, and replace the first image content with the second image content to obtain the target image data; and
a testing module, configured to perform a simulation test on the unmanned driving device controller through the target image data.

In addition, an embodiment of the present application further provides an electronic device, including:
a processor and a memory storing computer program instructions,
when the processor executes the computer program instructions, the method for testing an unmanned driving device controller as described in the second aspects above is implemented.

In addition, an embodiment of the present application provides a computer readable storage medium storing computer program instructions, which implements the method for testing an unmanned driving device controller as described in any one of the second aspects above when executed by a processor.

Furthermore, an embodiment of the present application provides a computer program product, which implements the method for testing an unmanned driving device controller as described in any one of the second aspects above when executed by at least one processor.

### BRIEF DESCRIPTION OF THE DRAWINGS

In order to more clearly illustrate the technical solution of the embodiments of the present application, the following will briefly introduce the drawings required for use in the description of the embodiments of the present application. Apparently, the drawings described below are only some embodiments of the present application. For those skilled in the art other drawings can be obtained based on these drawings without creative labor.
FIG. 1 is a schematic structural diagram of a system for testing an unmanned driving device controller provided by an embodiment of the present application;
FIG. 2 is a schematic structural diagram of the system for testing an unmanned driving device controller provided by an embodiment of the present application;
FIG. 3 is a schematic structural diagram of the system for testing an unmanned driving device controller provided by an embodiment of the present application;
FIG. 4 is a circuit principle block diagram of a main board of a video injection core board provided by an embodiment of the present application;
FIG. 5 is a circuit principle block diagram of a video injection submodule provided by an embodiment of the present application;
FIG. 6 is a flowchart of a method for testing an unmanned driving device controller provided by an embodiment of the present application;
FIG. 7 is a schematic structural diagram of apparatus for testing an unmanned driving device controller provided by an embodiment of the present application; and
FIG. 8 is a hardware structural diagram of an electronic device provided by an embodiment of the present application.

### DETAILED DESCRIPTION

The technical solutions in the embodiments of the present application will be described in detail below in conjunction with the drawings in the embodiments of the present application. Apparently, the described embodiments are part of the embodiments of the present application, not all of the embodiments. All other embodiments obtained by those skilled in the art based on the embodiments of the present application belong to the scope of protection of the present application.

The terms "first", "second", etc. in the specification and claims of the present application are used to distinguish similar objects, and are not used to describe a specific order or sequence. It should be understood that the data used in this way can be interchangeable under appropriate circumstances so that the embodiments of the present application can be implemented in an order other than those illustrated or described here, and the objects distinguished by "first", "second", etc. are generally of one type, and the quantity of objects is not limited. For example, the first object may be one or more. In addition, "and/or" in the specification and claims represents at least one of the connected objects, and the character "/" generally indicates that the objects associated with each other are in an "or" relationship.

Before introducing the technical solutions in the embodiments of the present application, the background technology of the present application is first introduced.

Generally speaking, the method for testing an unmanned driving device controller mainly includes the following three types: (1) model-in-the-loop or software-in-the-loop, which directly provides the road traffic video data stored in a computer or cloud server to the controller algorithm; (2) hardware in the loop simulation (HiL or HIL), which uses a hardware board to replace a camera and transmits video data to the input port of the controller through the hardware board interface; and (3) real vehicle testing, in which the vehicle is driven on an actual road, and the controller to be tested receives the real environment information acquired by the camera.

Among the above-mentioned schemes, the software-in-the-loop or model-in-the-loop test scheme can meet the requirements for rapid test in the early stage of algorithm development, but because the test scheme does not involve hardware, it can hardly test the underlying hardware drivers and does not consider physical conditions, so the test coverage and confidence are not as high as those of the hardware-in-the-loop test scheme. Compared with the software-in-the-loop test, the hardware-in-the-loop test scheme requires the construction of a complete set of hardware systems, which is more expensive and time-consuming. How to develop a system and apparatus for the efficient test that are suitable for different camera simulation requirements is challenging. Moreover, in the hardware-in-the-loop test scheme, the image data needs to be sent to the ECU for testing through the hardware board, which is not connected to a real camera. However, the image frame format that is exactly the same as that of the real camera needs to be sent during simulation. The image data configured to test the ECU is often simulated by software or downloaded from the Internet. The attribute information of the image data is likely to be inconsistent with the attribute information of the real image data obtained by the unmanned driving device during actual driving. Therefore, the image frame format sent by the camera can only be requested from the customer, who then has to turn to his supplier. Thus it is usually difficult to get accurate information or no information can be obtained, which affects the development efficiency and probably leads to low test accuracy.

In order to solve the above-mentioned problems, embodiments of present application provide a system and a method for testing an unmanned driving device controller, in which the system for testing an unmanned driving device controller includes an image acquisition device, configured to acquire first image data and send the first image data to a video injection core board; an image storage device, configured to send second image data to the video injection core board; the video injection core board, configured to analyze a first image attribute of the first image data to obtain the analyzed first image attribute, and replace the first image content in the first image data with the second image content in the second image data to obtain target image data which include at least the analyzed first image attribute and the second image content, and send the target image data to the unmanned driving device controller; and the unmanned driving device controller, configured to receive the target image data sent by the video injection core board and output control instructions based on the target image data. In this way, a real image acquisition device is connected to the system for testing an unmanned driving device controller provided in the embodiments of the present application, and the video injection core board can analyze the first image data sent by the image acquisition device. The simulation purpose can be achieved by replacing the first image content in the image acquisition device with the second image content in the image storage device. At this time, it is equivalent to utilizing part of the data of the image acquisition device, and the dependence on requesting parameters input by customers is very low, thereby improving development efficiency. In addition, the first image data acquired by the image acquisition device is a real image data, which ensures that the target image data used for testing has consistent attribute information with the real image data acquired during the driving process of the unmanned driving device, thereby improving the test accuracy.

The system for testing an unmanned driving device controller provided by the embodiments of the present application is described in detail through specific embodiments and application scenarios thereof in conjunction with the drawings.

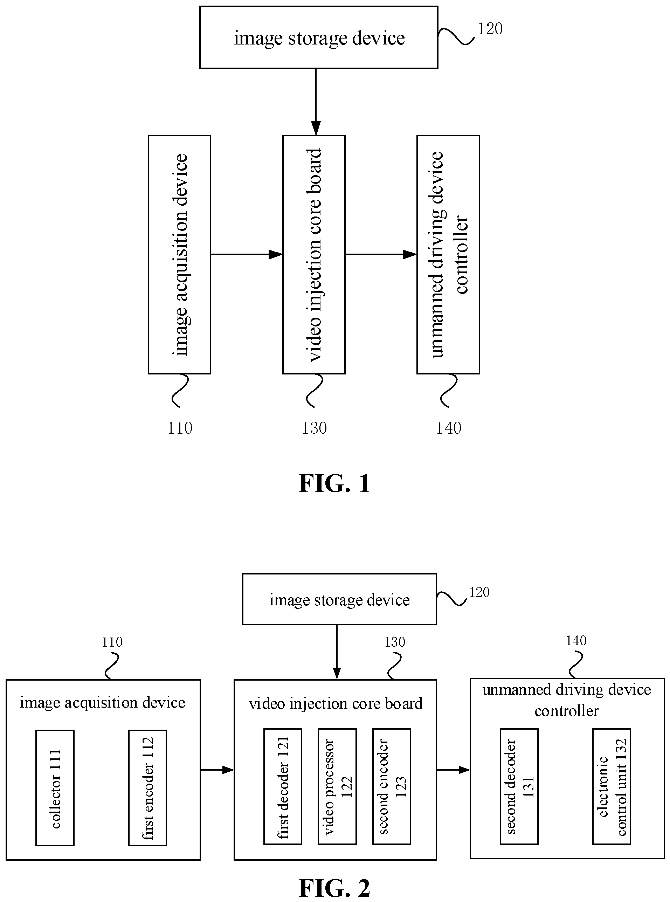

FIG. 1 is a schematic structural diagram of a system for testing an unmanned driving device controller provided by an embodiment of the present application. As shown in FIG. 1, the system for testing an unmanned driving device controller provided in an embodiment of the present application may include an image acquisition device 110, an image storage device 120, a video injection core board 130, and an unmanned driving device controller 140.

The image acquisition device 110 is configured to acquire first image data and send the first image data to the video injection core board 130, in which the first image data includes at least a first image attribute and a first image content.

The image storage device 120 is configured to send second image data to the video injection core board 130, in which the second image data includes a second image content.

The video injection core board 130 is configured to analyze the first image attribute to obtain an analyzed first image attribute, and replace the first image content with the second image content to obtain target image data, and send the target image data to the unmanned driving device controller 140, in which the target image data includes at least the analyzed first image attribute and the second image content.

The unmanned driving device controller 140 is configured to receive the target image data sent by the video injection core board 130 and output a control instruction based on the target image data.

In some embodiments of the present application, the image acquisition device 110 may be a device for acquiring image information, such as a camera, etc.

The first image data may be image data acquired by the image acquisition device 110, and the first image data may include at least a first image attribute and a first image content. Here, the first image attribute may be an attribute parameter for characterizing the image information acquired by the image acquisition device 110, and may also include attribute parameters of the image acquisition device 110, etc. For example, the first image attribute may include the image resolution, frame rate, pixel format, frame data structure (the data type represented by each row in a frame of image), etc. of the first image content.

The first image content may be the specific content of the image acquired by the image acquisition device, such as an object contained in the image, etc.

The image storage device 110 may be a device storing the second image data, such as a computer with a storage function, etc.

The second image data may be image data corresponding to the first image data sent by the image storage device 110. The second image data may include a second image content, which may be the same as the first image content, but with different image attributes.

The target image data may be image data obtained after the video injection core board 130 processes the first image data and the second image data, and the target image data may include at least the analyzed first image attribute and the second image content.

The video injection core board 130 may be a circuit board, on which a processor chip is integrated, for processing the first image data and the second image data to obtain the target image data.

In some embodiments of the present application, in order to accurately improve the test accuracy, there is also provided another structural schematic diagram of the system for testing an unmanned driving device controller, and as shown in FIG. 2, the image acquisition device 110 may specifically include:
a collector 111, configured to convert an optical signal into an image signal and send the image signal to a first encoder; and
the first encoder 112, configured to receive the image signal sent by the collector 111, encode the image signal to obtain the first image data, and send the first image data to the video injection core board 130.

The collector 111 may be a device for acquiring the first image data. For example, the collector 111 may be a complementary metal oxide semiconductor (CMOS) chip, that is, a CMOS chip is a photosensitive element inside the image acquisition device, which can convert light signals into binary image signals.

The first encoder 112 may be a device for encoding the acquired image signal, for example, an interactive video data service (IVDS) serialization chip.

Referring to FIG. 2, FIG. 2 specifically describes a hardware connection relationship among the image acquisition device 110, the image storage device 120, the video injection core board 130 and the unmanned driving device controller 140. The collector 111 converts the optical signal into an image signal, and then sends the image signal to the first encoder 112, which may encode the image signal to obtain first image data, and send the first image data to the video injection core board 130.

In some embodiments of the present application, the first encoder 112 is specifically configured to:
change a data form of the image signal from a parallel form to a serial form to obtain the first image data.

In some embodiments of the present application, still referring to FIG. 2, the video injection core board 130 may include:
a first decoder 121, configured to receive first image data in the serial form sent by the first encoder 112, decode the first image data in the serial form, and send the decoded first image data to a video processor 122;
the video processor 122, configured to receive the decoded first image data and the second image data sent by an image storage device 120, analyze the first image attribute to obtain the analyzed first image attribute, and replace the first image content with the second image content to obtain the target image data, and send the target image data to a second encoder 123; and
the second encoder 123, configured to encode the target image data, and send the encoded target image data to the unmanned driving device controller 140.

Herein, the first decoder 121 can be a device for decoding the first image data in the serial form sent by the first encoder.

The video processor 122 can be a device with processing function, for example, a field programmable gate array (FPGA) chip.

The second encoder 123 can be a device for encoding the target image data, for example, an IVDS serialization chip.

In some embodiments of the present application, LVDS is a communication protocol between the serialization chip and the deserialization chip, and the physical connection is a coaxial cable.

In some embodiments of the present application, the first decoder 121 decodes the first image data in the serial form, and specifically, a data form of the first image data in the serial form can be changed from the serial form to the parallel form, and when sending the decoded first image data to the video processor 122, the first image data in the parallel form can be sent to the video processor 122.

In some embodiments of the present application, when the second encoder 123 encodes the target image data, a data form of the target image data can be changed from the parallel form to the serial form, and when sending the encoded target image data to the unmanned driving device controller 140, the target image data in the serial form can be sent to the unmanned driving device controller 140.

In some embodiments of the present application, referring to FIG. 2, the unmanned driving device controller 140 can also include a second decoder 131 and an electronic control unit 132 of the unmanned driving device controller.

The second decoder 131 may be specifically configured to receive the target image data in the serial form, and then decode the target image data in the serial form. Specifically, it can modify the serial form of the target image data into a parallel form, and then send the target image data in the parallel form to the electronic control unit 132 of the unmanned driving device controller 140 to test the electronic control unit 132 of the unmanned driving device controller.

In some embodiments of the present application, the unmanned driving device controller 140 may also be configured to send to the video injection core board 130 a verification request to verify the integrated circuit bus of the image acquisition device 110.

The video injection core board 130 may also be configured to receive the verification request and send the verification request to the image acquisition device 110.

The image acquisition device 110 may also be configured to verify the integrated circuit bus and send the verification result to the video injection core board 130.

The video injection core board 130 may be configured to send the received verification result sent by the image acquisition device 110 to the unmanned driving device controller 140.

The verification request may be a request to verify the integrated circuit bus of the image acquisition device 110.

In the prior art, in a real vehicle environment, the unmanned driving device controller, as the master node of IIC communication, performs register configuration and data verification on the image acquisition device, which is the slave node of IIC. If the verification fails, the real vehicle cannot work normally. When the image acquisition device is removed and the video injection core board provided in the embodiment of the present application is connected, the video injection core board should also be able to serve as a slave node of IIC communication to meet the IIC verification requirements of the unmanned driving device controller. Referring to FIG. 2, in FIG. 2, the IIC control signal sent by the unmanned driving device controller 140 as the master node of IIC can be transparently transmitted to the IIC signal node in the video injection core board, and further transparently transmitted to the collector 111 of the image acquisition device 110 through the first decoder 121 in the video injection core board 130, thereby meeting the IIC verification requirements of the unmanned driving device controller 140 on the image acquisition device 110.

In some embodiments of the present application, in order to further improve the test efficiency of the unmanned driving device controller, the system for testing an unmanned driving device controller involved above may also include:
a video backplane, configured to carry the video injection core board and power the video injection core board.

In some embodiments of the present application, a power supply device may be integrated in the video backplane to power the video injection core board 130.

In some embodiments of the present application, the video backplane may also be configured to send a clock signal to the video injection core board 130.

The video injection core board is also configured to receive the clock signal and process the first image data and the second image data based on the clock signal to obtain the target image data.

In some embodiments of the present application, the video backplane may also provide a clock signal to the video injection core board 130 so that the video injection core board 130 starts the processing of the first image data and the second image data based on the clock signal to obtain the target image data.

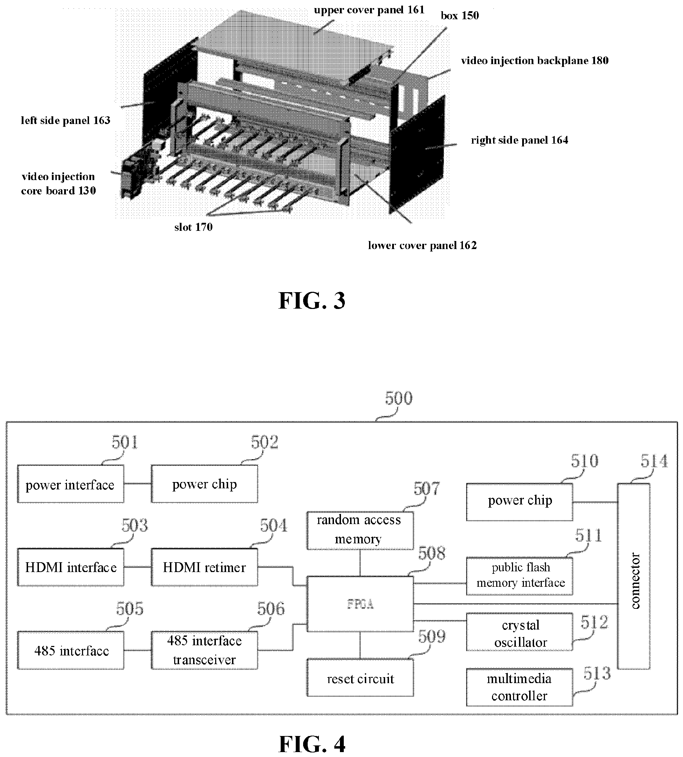

In some embodiments of the present application, in order to more clearly understand the system for testing an unmanned driving device controller provided in the embodiment of the present application, there is also provided another schematic structural diagram of the system for testing an unmanned driving device controller. As shown in FIG. 3, the system for testing an unmanned driving device controller also includes a 4 U box 150, a panel (the panel is divided into an upper cover panel 161, a lower cover panel 162, a left side panel 163 and a right side panel 164) and a slot 170.

It should be noted that in the device, U refers to the height, and the height of 1 U is 4.445 cm.

In some embodiments of the present application, the slots are arranged inside the box 150, with a total of 10 slots, and the space dimensions of each slot are: height 3 U, spacing 40.64 cm, and length 160 cm.

The video injection core board 130 is inserted into the slot 170 of the box 150, and the connector (not shown in FIG. 3) on the video injection core board 130 is connected to the connector (not shown in FIG. 3) on the video injection backplane 180 (i.e., the video backplane), in which the video injection core board 130 is composed of a main board and a replaceable video injection submodule installed on the main board.

The circuit principle block diagram of the main board of the video injection core board 130 is shown in FIG. 4. The core computing chip on the main board 500 of the video injection core board 130 is Xilinx ZU5 FPGA, and the FPGA is externally connected to a double data rate synchronous dynamic random access memory (Double Data Rate, DDR) chip for caching image data, and a Flash chip for storing the bit stream file of the FPGA program.

In the main board 500 of the video injection core board 130, the power interface 501 is connected to the power chip 502 to power the main board 500 of the video injection core board 130. The HDMI interface 503, the HDMI retimer 504 and the FPGA 508 are connected, and the HDMI interface can be connected to the image storage device 120, and is configured to send the second image data sent by the image storage device 120 to the FPGA 508. The 485 interface 505, the 485 interface transceiver 506 and the FPGA 508 are connected, and the 485 interface 505 can be connected to the host computer, and is configured to receive the configuration instructions sent by the host computer and configure the parameters of the FPGA 508. The FPGA 508 is also connected to the reset circuit 509, the random access memory 507, the public flash memory interface 511, and the crystal oscillator 512. The FPGA 508 is also connected to the connector 514, so as to interact with the first decoder (deserialization chip) and the second encoder (serialization chip) configured in the video injection submodule through the connector 514. The power chip 510 is connected to the connector 514, and is configured to supply power to the connector 514.

HDMI retimer 504 is a relay chip dedicated to transition-minimized differential signaling (TMDS) signal.

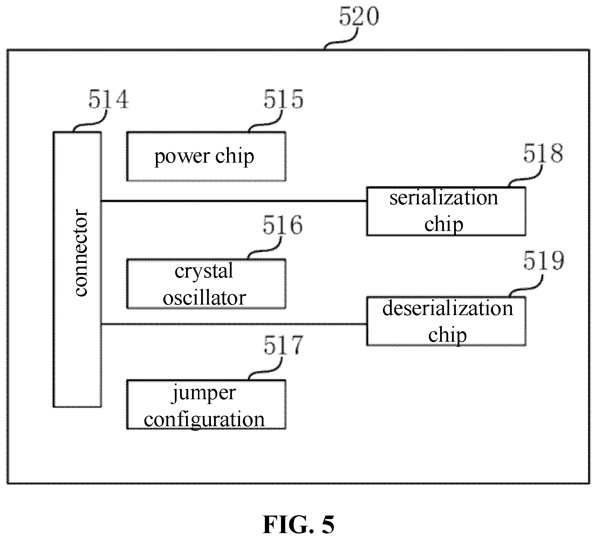

The circuit principle block diagram of the video injection submodule is shown in FIG. 5. The connector 514 in the video injection submodule 520 is connected to the connector in the main board 500 in the video injection core board 130, or the connector 514 is the connector in the main board 500 of the video injection core board 130. The connector 514 is connected to a serialization chip 518 and a deserialization chip 519 for transmitting data. In addition, the video injection submodule 520 also includes a power chip 515 for powering the video injection submodule 520. The video injection submodule 520 also includes a crystal oscillator 516 and a jumper configuration 517.

Compared with the previous video simulation board without image acquisition device, the system for testing an unmanned driving device controller provided by the embodiment of the present application can analyze the image parameters of the actual configuration of the vehicle-mounted image acquisition device and meet the IIC verification requirements of the unmanned driving device controller for the image acquisition device, thereby greatly improving the development efficiency of the hardware-in-the-loop test equipment of the unmanned driving device controller and accelerating the test progress of the unmanned driving device controller.

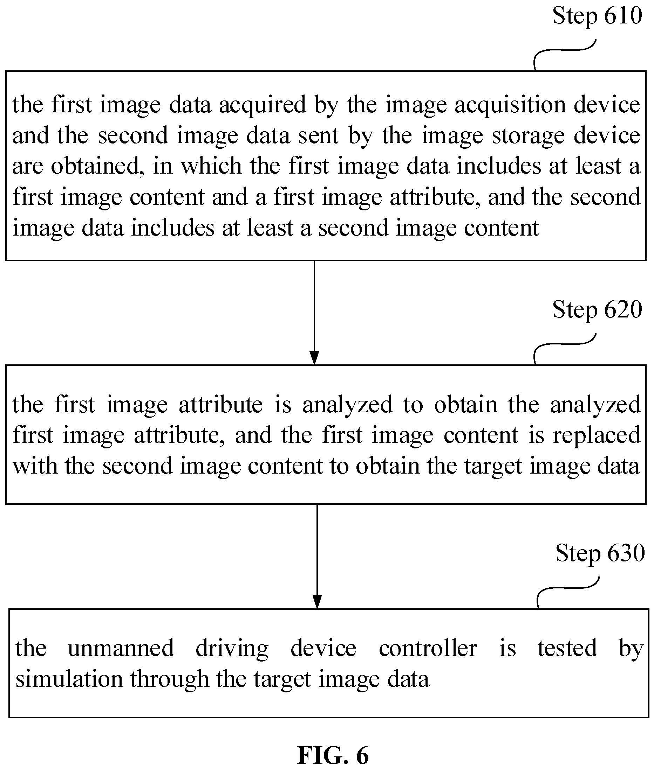

Based on the same inventive concept as those of the system for testing an unmanned driving device controller mentioned above, the present application also provides a method for testing an unmanned driving device controller. The method for testing an unmanned driving device controller provided by the embodiment of the present application is described in detail below in conjunction with FIG. 6.

FIG. 6 is a flowchart of a method for testing an unmanned driving device controller provided by an embodiment of the present application, which is applied to the system for testing an unmanned driving device controller provided by the above-mentioned embodiments. As shown in FIG. 6, the method for testing an unmanned driving device controller provided by the embodiment of the present application may include steps 610-630.

In Step 610, the first image data acquired by the image acquisition device and the second image data sent by the image storage device are obtained, in which the first image data includes at least a first image content and a first image attribute, and the second image data includes at least a second image content.

In Step 620, the first image attribute is analyzed to obtain the analyzed first image attribute, and the first image content is replaced with the second image content to obtain the target image data.

In Step 630, the unmanned driving device controller is tested by simulation through the target image data.

In the embodiments of the present application, the unmanned driving device controller is tested by simulation in such a way that the obtained first image attribute of the first image data acquired by the image acquisition device is analyzed, the first image content in the first image data is replaced with the second image content obtained from the image storage device, and then the analyzed first image attribute and the second image content are formed into the target image data. In this way, the first image data acquired by the real image acquisition device connected is obtained in the embodiment of the present application. It is only necessary to replace the first image content in the image acquisition device with the second image content in the image storage device to achieve the simulation purpose. At this time, it is equivalent to using part of the data of the image acquisition device, and the dependence on requesting parameters input by customer is very low, thereby improving development efficiency. The first image data acquired by the image acquisition device is a real image data, which ensures that the target image data used for testing has consistent attribute information with the real image data acquired during the driving process of the unmanned driving device, thereby improving the test accuracy.

Based on the method for testing an unmanned driving device controller provided in the above-mentioned embodiment, accordingly, the present application also provides a specific implementation of apparatus for testing an unmanned driving device controller. Please refer to the following embodiments.

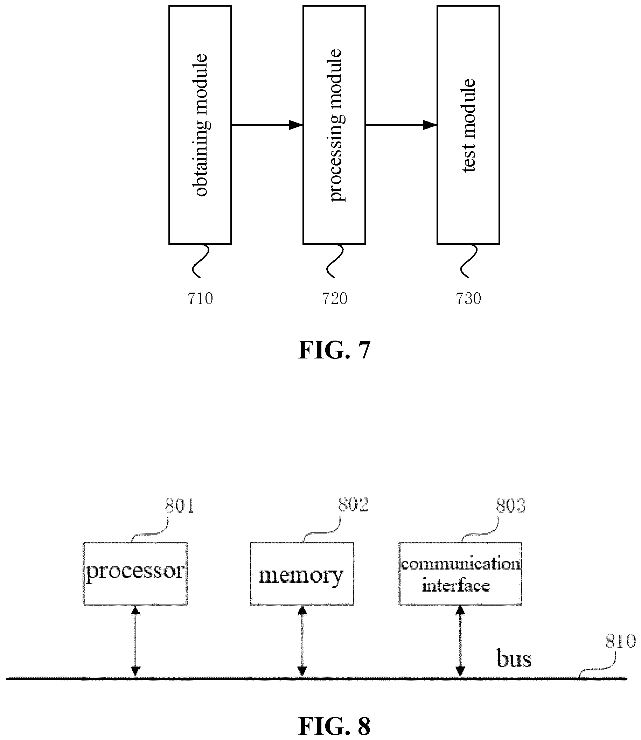

First, referring to FIG. 7, the apparatus for testing an unmanned driving device controller provided in the embodiment of the present application includes an obtaining module 710, a processing module 720 and a testing module 730.

The obtaining module 710 is configured to obtain the first image data acquired by the image acquisition device and the second image data sent by the image storage device, the first image data including at least the first image content and the first image attribute, and the second image data including at least the second image content.

The processing module 720 is configured to analyze the first image attribute to obtain the analyzed first image attribute, and replace the first image content with the second image content to obtain the target image data.

The testing module 730 is configured to perform a simulation test on the unmanned driving device controller through the target image data.

In the embodiment of the present application, the unmanned driving device controller is tested by simulation in such a way that the obtained first image attribute of the first image data acquired by the image acquisition device is analyzed, the first image content in the first image data is replaced with the second image content obtained from the image storage device, and then the analyzed first image attribute and the second image content are formed into the target image data. In this way, the first image data acquired by the real image acquisition device connected is obtained in the embodiment of the present application. It is only necessary to replace the first image content in the image acquisition device with the second image content in the image storage device to achieve the simulation purpose. At this time, it is equivalent to using part of the data of the image acquisition device, and the dependence on requesting parameters input by customer is very low, thereby improving development efficiency. The first image data acquired by the image acquisition device is a real image data, which ensures that the target image data used for testing has consistent attribute information with the real image data acquired during the driving process of the unmanned driving device, thereby improving the test accuracy.

The apparatus for testing the unmanned driving device controller provided in the embodiment of the present application can be configured to execute the method for testing an unmanned driving device controller provided in the above-mentioned method embodiments, and implementation principle and technical effect thereof are similar, which will not be repeated here for the sake of brief introduction.

Based on the same inventive concept, an embodiment of the present application also provides an electronic device.

FIG. 8 is a schematic structural diagram of an electronic device provided by an embodiment of the present application. As shown in FIG. 8, the electronic device may include a processor 801 and a memory 802 storing a computer program or instruction.

The test device of the unmanned driving device controller may include a processor 801 and a memory 802 storing a computer program instruction.

Specifically, the above-mentioned processor 801 may include a central processing unit (CPU), or an application specific integrated circuit (ASIC), or may be configured to implement one or more integrated circuits of the embodiment of the present application.

The memory 802 may include a large-capacity memory for data or instructions. By way of example and not limitation, the memory 802 may include a hard disk drive (HDD), a floppy disk drive, a flash memory, an optical disk, a magneto-optical disk, a magnetic tape, or a universal serial bus (USB) drive, or a combination of two or more of these. In appropriate cases, the memory 802 may include a removable or non-removable (or fixed) medium. In appropriate cases, the memory 802 may be inside or outside the integrated gateway disaster recovery device. In a specific embodiment, the memory 802 is a non-volatile solid-state memory.

In a specific embodiment, the memory 802 may include a read-only memory (ROM), a random access memory (RAM), a disk storage medium device, an optical storage medium device, a flash memory device, an electrical, optical or other physical/tangible memory storage device. Therefore, generally, the memory includes one or more tangible (non-transitory) computer-readable storage media (e.g., a memory device) encoded with software including computer executable instructions, and when the software is executed (e.g., by one or more processors), it is operable to perform the operations described with reference to the method according to one aspect of the present disclosure.

The processor 801 implements any of the methods for testing an unmanned driving device controller in the above embodiments by reading and executing the computer program instructions stored in the memory 802.

In one example, the test device for the unmanned driving device controller may also include a communication interface 803 and a bus 810. As shown in FIG. 8, the processor 801, the memory 802, and the communication interface 803 are connected through the bus 810 and communicate with each other.

The communication interface 803 is mainly configured to achieve the communication among the modules, apparatuses, units and/or devices in the embodiments of the present application.

The bus 810 includes hardware, software, or both, coupling the devices of the test device of the unmanned driving device controller to each other. By way of example and not limitation, the bus may include an accelerated graphics port (AGP) or other graphics bus, an enhanced industrial standard architecture (EISA) bus, a front side bus (FSB), a hypertransport (HT) interconnect, an industrial standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standard association local (VLB) bus, or other suitable buses or a combination of two or more of the above. Where appropriate, the bus 810 may include one or more buses. Although the embodiments of the present application describe and illustrate specific buses, any suitable bus or interconnect are considered in the present application.

The test device of the unmanned driving device controller can execute the method for testing an unmanned driving device controller in the embodiments of the present application, thereby implementing the method and the apparatus for testing an unmanned driving device controller described in conjunction with FIG. 6 and FIG. 7.

In addition, in combination with the method for testing an unmanned driving device controller in the above-mentioned embodiments, the embodiments of the present application may provide a computer storage medium for implementation. The computer storage medium stores computer program instructions, and when the computer program instructions are executed by the processor, any one of the methods for testing an unmanned driving device controller in the above-mentioned embodiments is implemented.

In addition, in combination with the method for testing an unmanned driving device controller in the above-mentioned embodiments, the embodiment of the present application may provide a computer program product, and when the instructions in the computer program product are executed by the processor of the electronic device, the electronic device implements any one of the methods for testing an unmanned driving device controller in the above-mentioned embodiments.

It should be clear that the present application is not limited to the specific configuration and processing described above and shown in the figure. For the sake of simplicity, the detailed description of the known method is omitted here. In the above embodiments, several specific steps are described and shown as examples. However, the method process of the present application is not limited to the specific steps described and shown, and technicians in this field can make various changes, modifications and additions, or change the order between the steps after understanding the gist of the present application.

The functional blocks shown in the structural block diagram described above can be implemented as hardware, software, firmware or a combination thereof. When implemented in hardware, the functional block may be, for example, an electronic circuit, an application-specific integrated circuit (ASIC), appropriate firmware, a plug-in, a function card, etc. When implemented in software, the elements of the present application are programs or code segments configured to perform the required tasks. The program or code segment can be stored in a machine-readable medium, or transmitted on a transmission medium or communication link via a data signal carried in a carrier. "Machine-readable medium" can include any medium capable of storing or transmitting information. Examples of machine-readable media include electronic circuits, semiconductor memory devices, ROMs, flash memories, erasable ROMs (EROMs), floppy disks, CD-ROMs, optical disks, hard disks, optical fiber media, radio frequency (RF) links, and the like. The code segments can be downloaded via computer networks such as the Internet, intranets, and the like.

It should also be noted that the exemplary embodiments mentioned in this application describe some methods or systems based on a series of steps or apparatuses. However, the present application is not limited to the order of the above steps, that is, the steps can be carried out in the order mentioned in the embodiments, or in a different order from the embodiments, or several steps can be carried out simultaneously.

The above describes various aspects of the present disclosure with reference to the flowcharts and/or block diagrams of the methods, apparatuses (systems) and computer program products according to the embodiments of the present disclosure. It should be understood that each box in the flowchart and/or block diagram and the combination of boxes in the flowchart and/or block diagram can be implemented by computer program instructions. These computer program instructions can be provided to a processor of a general-purpose computer, a special-purpose computer, or other programmable data processing apparatus to produce a machine, so that these instructions executed by the processor of the computer or other programmable data processing apparatus enable the implementation of the functions/actions specified in one or more boxes in the flowchart and/or block diagram. Such a processor can be, but is not limited to, a general-purpose processor, a special-purpose processor, a special application processor or a field programmable logic circuit. It can also be understood that each box in the block diagram and/or flowchart and the combination of boxes in the block diagram and/or flowchart can also be implemented by dedicated hardware that performs the specified function or action, or can be implemented by a combination of dedicated hardware and computer instructions.

The above is only a specific implementation of the present application. It can be clearly understood by technicians in the relevant field that for the convenience and simplicity of description, the specific working process of the system, module and unit described above can refer to the corresponding process in the aforementioned method embodiment, and will not be repeated here. It should be understood that the protection scope of the present application is not limited thereto, and any technician familiar with the technical field can easily think of various equivalent modifications or substitutions within the technical scope disclosed in the present application, and these modifications or substitutions should be included in the protection scope of the present application.

## Claims

1. A system for testing an unmanned driving device controller, comprising:
an image acquisition device (110), configured to acquire first image data and send the first image data to a video injection core board (130), wherein the first image data comprises at least a first image attribute and a first image content;
an image storage device (120), configured to send second image data to the video injection core board (130), wherein the second image data comprises a second image content;
the video injection core board (130), configured to analyze the first image attribute to obtain an analyzed first image attribute, replace the first image content with the second image content to obtain target image data, and send the target image data to the unmanned driving device controller (140), wherein the target image data comprises at least the analyzed first image attribute and the second image content; and
the unmanned driving device controller (140), configured to receive the target image data sent by the video injection core board (130) and output a control instruction based on the target image data.

2. The system according to claim 1, wherein the image acquisition device (110) comprises:
a collector (111), configured to convert an optical signal into an image signal and send the image signal to a first encoder (112); and
the first encoder (112), configured to receive the image signal sent by the collector (111), encode the image signal to obtain the first image data, and send the first image data to the video injection core board (130).

3. The system according to claim 2, wherein the first encoder (112) is configured to:
change a data form of the image signal from a parallel form to a serial form to obtain the first image data.

4. The system according to claim 2 or 3, wherein the video injection core board (130) comprises:
a first decoder (121), configured to receive the first image data in a serial form sent by the first encoder (112), decode the first image data in a serial form, and send decoded first image data to a video processor (122);
the video processor (122), configured to receive the decoded first image data and the second image data sent by the image storage device (120), analyze the first image attribute to obtain the analyzed first image attribute, replace the first image content with the second image content to obtain the target image data, and send the target image data to a second encoder (123); and
the second encoder (123), configured to encode the target image data, and send encoded target image data to the unmanned driving device controller (140).

5. The system according to claim 4, wherein the first decoder (121) is configured to change a data form of the first image data in a serial form from the serial form to the parallel form, and send the first image data in the parallel form to the video processor (122).

6. The system according to claim 4 or 5, wherein the second encoder (123) is configured to change a data form of the target image data from the parallel form to the serial form, and send the target image data in the serial form to the unmanned driving device controller (140).

7. The system according to any one of claims 1 to 6, wherein the unmanned driving device controller (140) further comprises:
a second decoder (131), configured to receive the target image data in the serial form sent by the second encoder (123), decode the target image data in the serial form, and send decoded target image data to an electronic control unit (132); and
the electronic control unit (132), configured to test the electronic control unit (132) based on the decoded target image data.

8. The system according to any one of claims 1 to 6, wherein the unmanned driving device controller (140) is further configured to send to the video injection core board (130) a verification request to verify an integrated circuit bus of the image acquisition device (110);
the video injection core board (130) is further configured to receive the verification request and send the verification request to the image acquisition device (110);
the image acquisition device (110) is further configured to verify the integrated circuit bus and send a verification result to the video injection core board (130); and
the video injection core board (130) is configured to send the received verification result sent by the image acquisition device (110) to the unmanned driving device controller (140).

9. The system according to any one of claims 1 to 6, further comprising:
a video backplane, configured to carry the video injection core board (130) and power the video injection core board (130).

10. The system according to claim 9, wherein the video backplane is further configured to send a clock signal to the video injection core board (130), and the video injection core board (130) is further configured to receive the clock signal and process the first image data and the second image data based on the clock signal to obtain the target image data.

11. A method for testing an unmanned driving device controller, applied to the system for testing an unmanned driving device controller according to any one of claims 1 to 9, the method comprising:
obtaining first image data acquired by the image acquisition device (110) and second image data sent by the image storage device (120), wherein the first image data comprises at least the first image content and the first image attribute, and the second image data comprises at least the second image content;
parsing the first image attribute to obtain an analyzed first image attribute, and replacing the first image content with the second image content to obtain target image data; and
performing a simulation test on the unmanned driving device controller (140) through the target image data.

12. Apparatus for testing an unmanned driving device controller, applied to the system for testing an unmanned driving device controller according to any one of claims 1 to 10, the apparatus comprising:
an obtaining module, configured to obtain first image data acquired by the image acquisition device (110) and second image data sent by the image storage device (120), wherein the first image data comprises at least the first image content and the first image attribute, and the second image data comprises at least the second image content;
a processing module, configured to analyze the first image attribute to obtain the analyzed first image attribute, and replace the first image content with the second image content to obtain target image data; and
a testing module, configured to perform a simulation test on the unmanned driving device controller through the target image data.

13. An electronic device, comprising a processor and a memory that stores a program or instruction capable of being operated on the processor, wherein the program or instruction, when executed by the processor, implements steps of the method for testing an unmanned driving device controller according to claim 11.

14. A readable storage medium storing a program or instruction, which implements steps of the method for testing an unmanned driving device controller according to claim 11 when executed by a processor.

15. A computer program product, which implements the method for testing an unmanned driving device controller according to claim 11 when executed by at least one processor.
